**Europäisches Patentamt**

**European Patent Office**

**Office européen des brevets**

(19)

(11) Veröffentlichungsnummer: **0 020 914**
**A1**

# (12) EUROPÄISCHE PATENTANMELDUNG

(21) Anmeldenummer: 80102096.7

(22) Anmeldetag: 18.04.80

(51) Int. Cl.³: **G 02 B 7/11**, G 02 B 15/14, G 03 B 3/10

(30) Priorität: **27.06.79 DE 2925906**

(43) Veröffentlichungstag der Anmeldung: **07.01.81**
**Patentblatt 81/1**

(84) Benannte Vertragsstaaten: **AT BE CH FR GB IT LI LU NL SE**

(71) Anmelder: **Rollei-Werke Franke & Heidecke GmbH + Co KG, Salzdahlumer Strasse 196, D-3300 Braunschweig (DE)**

(72) Erfinder: **Rösner, Ortwin, Dr., Hiltenspergerstrasse 58, D-8000 München 40 (DE)**

(74) Vertreter: **Pretzell, Hellmut, Dipl.-Ing., Salzdahlumer Strasse 196, D-3300 Braunschweig (DE)**

(54) Optisches Abbildungssystem mit veränderbarer Brennweite, insbesondere Zoomobjektiv für fotografische Kameras.

(57) Es ist ein optisches Abbildungssystem mit veränderbarer Brennweite, insbesondere Zoomobjektiv für fotografische Kameras, angegeben, das sich durch einen geringen Fertigungsaufwand und sehr gute Abbildungsqualität auszeichnet. Das optische Abbildungssystem weist ein auf einer festen Bildebene (10) abbildendes Linsensystem (11) mit mindestens zwei in der optischen Achse hintereinander angeordnete Linsen bzw. Linsengruppen (12, 13), deren Abstand voneinander änderbar ist, und eine manuelle oder motorische Einstellvorrichtung (14) zum Einstellen der Brennweite des Linsensystems (11) auf. Die Einstellvorrichtung (14) greift an einer der beiden Linsen bzw. Linsengruppen (13) an und vermag diese unabhängig von der anderen zu verstellen. Mit der anderen Linse bzw. Linsengruppe (12) oder dem Linsensystem (11) ist eine Focussiervorrichtung (15) gekoppelt, die diese Linse bzw. Linsengruppe (12) oder das Linsensystem (11), vorzugsweise selbsttätig, derart verstellt, dass das Linsensystem (11) auf der Bildebene (10) scharf abbildet.

Rollei-Werke Franke & Heidecke

3300 Braunschweig                         12.6.1979

                                          A 1160


Optisches Abbildungssystem mit veränderbarer
Brennweite, insbesondere Zoomobjektiv für
fotografische Kameras


Die Erfindung betrifft ein optisches Abbildungssystem mit
veränderbarer Brennweite, insbesondere ein Zoomobjektiv für
fotografische Kameras, der im Oberbegriff des Anspruchs 1
definierten Gattung.

Ein bekanntes Abbildungssystem mit veränderbarer Brennweite
weist in seiner einfachsten Ausführung zwei Linsen auf, deren
Abstand in Richtung der optischen Achse voneinander zur Einstellung der Brennweite geändert wird. Hierbei muß die Verstellung der einen Linse in einem ganz bestimmten Zusammenhang zu der Verstellung der anderen Linse erfolgen. Dieser
Zusammenhang wird durch folgende Gleichungen wiedergegeben:

$$L_1 = f_1^* - \frac{f_2^*}{f_1^*} \quad \frac{(f_1^* - f_{12}^*)^2}{f_{12}^*} \tag{1}$$

$$s^* = f_2^* - \frac{f_2^*}{f_1^*} \quad f_{12}^* \tag{2},$$

wobei sind:

$L_1$ = der Abstand der vorderen, ersten Linse von der festen Brennebene,

$s^*$ = der Abstand der hinteren, zweiten Linse von der festen Brennebene (bildseitige Schnittweite),

$f_1^*$ = die bildseitige Brennweite der ersten Linse,

$f_2^*$ = die bildseitige Brennweite der zweiten Linse,

$f_{12}^*$ = die resultierende Brennweite des optischen Systems.

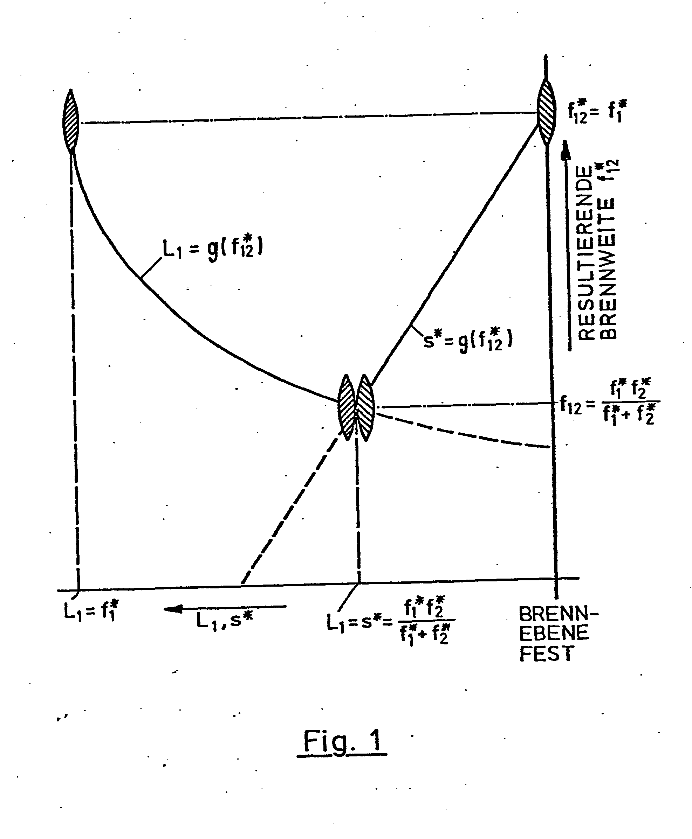

In Fig. 1 der Zeichnung ist dieser Zusammenhang grafisch dargestellt, wobei jeweils der Abstand der Linsen $L_1$ bzw. $s^*$ in Abhängigkeit von der resultierenden Brennweite $f_{12}^*$ aufgetragen ist. Aus dieser Darstellung ist deutlich zu erkennen, daß die hintere Linse linear mit der gewünschten resultierenden Brennweite $f_{12}^*$ verstellt werden muß und die vordere Linse entsprechend einer Kurve zweiter Ordnung. Wird dieser Zusammenhang korrekt eingehalten, so bleibt die Lage der Brennebene bei beliebiger resultierender Brennweite konstant.

0020914

Bei dem bekannten optischen Abbildungssystem dieser Art sind
zur Realisierung dieses Zusammenhangs bei der Verstellung
der vorderen und hinteren Linse den Gl. (1) und (2) entsprechende Kurven in den Mantel eines Zylinders gefräst. Der
Zylinder ist um seine Achse drehbar. Im Innern des Zylinders
sind die beiden Linsen axial verschiebbar angeordnet und mit
Halterungen in den Kurven im Zylinder geführt. Durch diese
Konstruktion wird eine Zwangskopplung der Abstände zwischen
den beiden Linsen sichergestellt, die den obigen Gl. entsprechen.

Der fertigungstechnische Aufwand für ein solches mechanisch
kompensiertes optisches Abbildungssystem ist beträchtlich. Die
Kurven in dem Zylinder müssen mit erheblicher Fertigungsgenauigkeit gefräst werden. Bereits geringe Toleranzen in den
Kurven führen zu Abweichungen von den Sollwerten der Linsenlagen, damit zu Abweichungen von den Sollagen der Bildebene, was
zu einer deutlichen Verschlechterung der Abbildung in der
ortsfesten Empfängerebene führt. Der Erfindung liegt die Aufgabe zugrunde, ein optisches Abbildungssystem mit veränderbarer Brennweite der eingangs genannten Art zu schaffen, das
sich durch einen geringen Fertigungsaufwand und durch sehr
gute Abbildungsqualität auszeichnet.

Diese Aufgabe ist bei einem optischen Abbildungssystem der
im Oberbegriff des Anspruchs 1 definierten Gattung erfindungsgemäß durch die Merkmale im Kennzeichnungsteil des Anspruchs 1
gelöst.

Bei dem erfindungsgemäßen optischen Abbildungssystem entfällt
die mechanische Zwangskopplung zwischen den zueinander beweglichen Linsen bzw. Linsengruppen bei der Veränderung oderEinstellung der Brennweite. Das aufwendige und teuere Fräsen von
Steuerkurven in drehbaren Zylinderteilen mit äußerst kleinen
Toleranzen entfällt völlig. Dadurch können die Lohnkosten zur Fertigung des Systems erheblich gesenkt werden. Die mechanische Zwangskopplung wird durch einen elektronischen Regler ersetzt, der nicht nur preislich niedriger liegt, sondern auch eine exakte Lage der Bildebene des Systems garantiert. Durch die Verwendung einer Focussiervorrichtung kann nicht nur auf an sich bekannte und bereits markteingeführte Konstruktionen zurückgegriffen werden, die die Fertigungskosten weiter niedrig halten, sondern auch ein problemloses Objektivwechseln ermöglicht werden, wobei Objektive unterschiedlichen Zoombereichs und unterschiedlicher optischer Daten der Linsen bzw. Linsengruppen mit nur geringfügigen Änderungen und entsprechenden Anpassungen der Focussiervorrichtung bzw. deren Regler an die jeweiligen Objektive verwendet werden können.

In Verbindung mit einer fotografischen Kamera, Stehbild- oder kinematografischen Kamera, ergibt das erfindungsgemäße Abbildungssystem den weiteren Vorteil, daß beim Zoomen sich bewegende Objekte nicht aus dem Schärfentiefenbereich der eingestellten Entfernung heraustreten und damit zu einer Unschärfe der fotografischen Aufnahme führen können, denn die Einstellung der Brennweite erfolgt erfindungsgemäß über das Kriterium "scharfes Bild", so daß damit gleichzeitig auch das Aufnahmeobjekt immer scharf abgebildet ist.

Bei fotografischen Kameras, die mit automatischer Entfernungseinstellung ausgerüstet werden sollen, ergibt sich dabei der Vorteil, daß die erforderliche Focussiervorrichtung nur einmal vorhanden zu sein braucht und sowohl die Regelung der Objektivbrennweite als auch die Scharfeinstellung durchführt. Damit ist bei sogenannten "vollautomatisierten" Kameras ein weiterer Schritt zur Senkung der Herstellungskosten getan.

Weitere Ausführungsformen der Erfindung mit erfindungswesentlichen Ausgestaltungen und Weiterbildungen sind Gegenstand
der Unteransprüche, auf die hier ausdrücklich Bezug genommen
wird. Diese weiteren Ausführungsformen der Erfindung sind
in der Beschreibung im einzelnen näher erläutert.

Die Erfindung ist anhand eines in der Zeichnung dargestellten Ausführungsbeispiels im folgenden beschrieben. Es zeigen:

Fig. 1    eine schematische grafische Darstellung des
          Zusammenhangs der Lagenveränderung von zwei
          Linsen eines optischen Abbildungssystems zur
          Einstellung von dessen Brennweite,

Fig. 2    eine schematische Darstellung eines optischen
          Abbildungssystems.

In Fig. 1 ist auf der Ordinate die resultierende Brennweite
$f_{12}^{*}$ des optischen Abbildungssystems und auf der Abszisse
der Abstand von zwei zueinander beweglichen Linsen des Abbildungssystems zu der festen Brenn- oder Bildebene aufgetragen. Die
eingetragenen Kurven $L_1 = g(f_{12}^{*})$ für die vordere, erste Linse,
und $s^{*} = g(f_{12}^{*})$ für die zweite, hintere Linse entspricht
den eingangs beschriebenen Gl. (1) und (2). Diese grafische
Darstellung dient zur Verdeutlichung des Zusammenhangs der
Lagenänderung von zwei zueinander beweglichen Linsen im optischen Abbildungssystem, wie eingangs ausführlich dargelegt
worden ist.

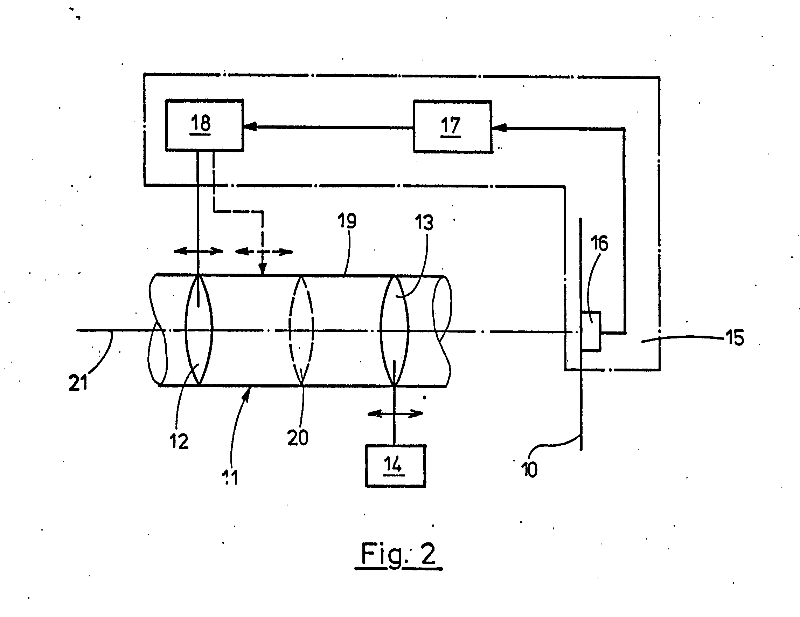

In Fig. 2 ist schematisch ein Abbildungssystem mit veränderbarer Brennweite dargestellt, das einen Aufnahmegegenstand
auf einer festen Bildebene 10 abbildet. Ein solches Abbildungssystem kann ein Zoomobjektiv in einer fotografischen
Kamera sein.

Das optische Abbildungssystem weist ein auf der räumlich feststehenden Bildebene 10 abbildendes Linsensystem 11 auf, das mindestens zwei Linsen oder Linsengruppen 12, 13 enthält. Diese beiden Linsen bzw. Linsengruppen 12, 13 sind in der strichpunktiert eingezeichneten optischen Achse 21 hintereinanderliegend angeordnet. Der Abstand zwischen den Linsen bzw. Linsengruppen 12, 13 kann zur Einstellung der Brennweite des Linsensystems 11 verändert werden. Hierzu ist eine manuelle oder motorische Einstellvorrichtung 14 vorgesehen.

Die Einstellvorrichtung 14 greift an einer der beiden Linsen bzw. Linsengruppen 12, 13, hier an der hinteren, der Bildebene 10 nächstliegenden Linse bzw. Linsengruppe 13, an und kann diese unabhängig von der vorderen Linse bzw. Linsengruppe 12 verstellen. Hierzu sind die beiden Linsen bzw. Linsengruppen 12 und 13 in Bezug auf die Einstellvorrichtung 14 mechanisch entkoppelt, d.h. eine Verstellung der hinteren Linse bzw. Linsengruppe 13 verursacht keine Verstellung der vorderen Linse bzw. Linsengruppe 12.

Das optische Abbildungssystem weist außerdem noch eine Focussiervorrichtung 15 auf, die im Ausführungsbeispiel mit der vorderen Linse bzw. Linsengruppe 12 verbunden ist. Diese Focussiervorrichtung 15 verstellt die vordere Linse bzw. Linsengruppe 12 solange, bis die Brennebene des Linsensystems 11 im wesentlichen auf der Bildebene 10 liegt und somit das Aufnahmeobjekt scharf abbildet. Hierzu weist die Focussiereinrichtung 15 mindestens einen in der Bildebene 10 oder in einer zu der Bildebene konjugierten Ebene angeordneten lichtempfindlichen Sensor 16, einen Regler 17 und ein an der vorderen Linse bzw. Linsengruppe 12 angreifendes, vorzugsweise motorisches Stellglied 18 auf. Eine solche Focussiereinrichtung ist bekannt und wird in Kameras schon vielfach angewendet. Eine solche Focussiereinrichtung kann einen an sich bekannten Entfernungsmesser mit Basis an der Kamera, eine an sich bekannte Ultra- schallaufzeitmessung, eine an sich bekannte Laufzeitmessung mit unsichtbarem Laserlicht od. dgl. aufweisen. Alle diese Arten von Fucossierhilfen oder automatischen Focussiervorrichtungen eignen sich zur Anwendung in dem erfindungsgemäßen optischen Abbildungssystem.

In dem beschriebenen Ausführungsbeispiel sind die beiden Linsen bzw. Linsengruppen 12, 13 in einer Fassung 19 gehalten und darin unabhängig voneinander axial verschieblich geführt. Üblicherweise sind noch weitere Linsen bzw. Linsengruppen 20 in der Fassung 19 feststehend angeordnet. Mittels der Einstellvorrichtung 14 wird die hintere Linse bzw. Linsengruppe 13 und mit der Focussiervorrichtung 15 die vordere Linse bzw. Linsengruppe 12 in der Fassung 19 bei räumlich feststehenden weiteren Linsen bzw. Linsengruppen 20 bewegt. Die beiden Linsen bzw. Linsengruppen 12, 13 sind also bei ihrer Verstellung völlig voneinander gelöst.

Es ist auch möglich, daß die Focussiervorrichtung 15 bzw. deren Stellglied 18 nicht an der vorderen Linse bzw. Linsengruppe 12 sondern an dem gesamten Linsensystem 11 angreift. Bei der Focussierung des Linsensystems 11 mittels der Focussiereinrichtung 15 erfolgt dann eine Gesamtverstellung des Linsensystems 11, wobei die zuvor eingestellte relative Lage der hinteren Linse bzw. Linsengruppe 13 zu der vorderen Linse bzw. Linsengruppe 12 unverändert beibehalten wird. In diesem Fall sind die beiden Linsen oder Linsengruppen 12, 13 in Bezug auf die Einstellvorrichtung 14 nach wie vor mechanisch entkoppelt, doch in Bezug auf die Focussiervorrichtung 15 bzw. deren Stellglied 18 miteinander und mit den weiteren Linsen bzw. Linsengruppen 20 des Linsensystems 11 starr verbunden. Eine Betätigung der Einstellvorrichtung 14 hat also eine Verschiebung der hinteren Linse bzw. Linsengruppe 13 innerhalb des Linsensystems 11 zur Folge, während eine Betätigung des Stellglieds 18 durch den Regler 17 der Focussiervorrichtung 15 eine Verschiebung des gesamten Linsensystems 11 relativ zu der festen Bildebene 10 unter Einbeziehung der hinteren Linse bzw. Linsengruppe 13 zur Folge hat.

Die Erfindung ist nicht auf das beschriebene Ausführungsbeispiel beschränkt. So kann z.B. auch die Einstellvorrichtung 14 an der vorderen Linse bzw. Linsengruppe 12 angreifen, während die Focussiervorrichtung 15 mit der hinteren Linse bzw. Linsengruppe 13 oder dem gesamten Linsensystem 11 gekoppelt ist. Diese Regelung der hinteren Linse bzw. Linsengruppe 13 über die Focossiervorrichtung 15 bietet den Vorteil der kürzeren Entfernung zur Bildebene 10 und damit der kleineren Verschiebung der Linse bzw. Linsengruppe 13 bei Einstellung der gleichen Brennweite. Das Stellglied 18 der Focussiervorrichtung 15 braucht daher nur für kleine Verstellwege ausgelegt zu werden.

Die Erfindung ist weiterhin nicht auf mechanisch kompensierte Abbildungssysteme beschränkt sie kann insbesondere auch bei optisch kompensierten Abbildungssystemen durch entsprechende Ausbildungen Verwendung finden.

-.-.-.-.-.-

Rollei-Werke Franke & Heidecke
3300 Braunschweig                           12.6.1979
                                            A 1160


                 P a t e n t a n s p r ü c h e


1. Optisches Abbildungssystem mit veränderbarer Brennweite,
   insbesondere Zoomobjektiv für fotografische Kameras, mit
   einem auf einer festen Bildebene abbildenden Linsensystem,
   das mindestens zwei in der optischen Achse hintereinander
   angeordnete  Linsen bzw. Linsengruppen aufweist, deren Lage
   **zueinander veränderbar ist,**      und mit einer manuellen
   oder motorischen Einstellvorrichtung zum Einstellen der
   Brennweite des Linsensystems, d a d u r c h   g e k e n n -
   z e i c h n e t, daß die Einstellvorrichtung (14) an mindestens eine
   der beiden Linsen bzw. Linsengruppen (13) angreift und diese
   unabhängig von den anderen zu verstellen vermag und daß eine
   mit der anderen Linse bzw. Linsengruppe (12) oder dem Linsensystem (11) gekoppelte Focussiervorrichtung (15) vorgesehen
   ist, die diese Linsenbzw. Linsengruppen (12) oder das Linsensystem (11), vorzugsweise selbsttätig, derart verstellt, daß
   das Linsensystem (11) auf der Bildebene (10) scharf abbildet.

2. Optisches Abbildungssystem nach Anspruch 1, d a d u r c h
   g e k e n n z e i c h n e t, daß die beiden Linsen oder
   Linsengruppen (12, 13) in Bezug auf die Einstellvorrichtung
   (14) mechanisch entkoppelt und in Bezug auf die Focussiervorrichtung (15) mechanisch entkoppelt oder miteinander und
   mit eventuell weiteren Linsen bzw. Linsengruppen (20) des
   Linsensystems (11) starr verbunden sind.

3. Optisches Abbildungssystem nach Anspruch 1 , d a -
d u r c h   g e k e n n z e i c h n e t, daß die Focussiervorrichtung (15) mindestens einen in der Bildebene (10)
oder einer dazu konjugierten Ebene angeordneten lichtempfindlichen Sensor (16), ein an der einen Linse bzw.
Linsengruppe (12) oder dem Linsensystem (11) angreifendes,
vorzugweise motorisches Stellglied (18) und einen das Stellglied (18) in Abhängigkeit von Signalen des Sensors (16)
betätigenden Regler (17) aufweist.

4. Optisches Abbildungssystem nach Anspruch 1 oder 2,
g e k e n n z e i c h n e t   d u r c h die Verwendung einer
an sich bekannten elektronischen automatischen Focussiervorrichtung.

5. Optisches Abbildungssystem nach Anspruch 1 oder 2,
g e k e n n z e i c h n e t   d u r c h  die Verwendung in
einer Laufbildkamera.

6. Optisches Abbildungssystem nach Anspruch 2, d a d u r c h
g e k e n n z e i c h n e t, daß die Focussiervorrichtung
(15) mindestens einen in der Bildebene (10) oder einer
dazu konjugierten Ebene angeordneten lichtempfindlichen
Sensor (16), ein an der einen Linse bzw. Linsengruppe (12)
oder dem Linsensystem (11) angreifendes, vorzugsweise
motorisches Stellglied (18) und einen das Stellglied (18)
in Abhängigkeit von Signalen des Sensors (16) betätigenden
Regler (17) aufweist.

7. Optisches Abbildungssystem nach Anspruch 3 oder 6, g e -
k e n n z e i c h n e t   d u r c h die Verwendung einer
an sich bekannten elektronischen automatischen Focussiervorrichtung.

- 11 -

8. Optisches Abbildungssystem nach Anspruch 3 oder 4,
   g e k e n n z e i c h n e t   d u r c h die Verwendung in
   einer Laufbildkamera.

9. Optisches Abbildungssystem nach Anspruch 6, g e k e n n -
   z e i c h n e t   d u r c h  die Verwendung in einer Laufbildkamera.

10. Optisches Abbildungssystem nach Anspruch 1 oder 2 gekennzeichnet durch die Verwendung bei optisch kompensierten
    Abbildungssystemen.

0020914

$$f_{12}^{*} = f_{1}^{*}$$

$$L_1 = g(f_{12}^{*})$$

$$s^{*} = g(f_{12}^{*})$$

RESULTIERENDE BRENNWEITE $f_{12}^{*}$

$$f_{12} = \frac{f_1^{*} f_2^{*}}{f_1^{*} + f_2^{*}}$$

$$L_1 = f_1^{*}$$

$$\longleftarrow L_1, s^{*}$$

$$L_1 = s^{*} = \frac{f_1^{*} f_2^{*}}{f_1^{*} + f_2^{*}}$$

BRENN-
EBENE
FEST

Fig. 1

Fig. 2

Europäisches Patentamt

**EUROPÄISCHER RECHERCHENBERICHT**

Nummer der Anmeldung

EP 80 10 2096

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 2 458 893</u> (MINOLTA) <br> * Patentansprüche; Figuren 1,4,5 * | 1,4,5 |
| | <u>DE - B - 2 425 645</u> (J. SCHNEIDER) <br> * Patentanspruch 1 ; Figuren * | 1 |
| | <u>DE - A - 2 410 744</u> (CANON) <br> * Seite 4, Zeilen 1-10; Patent- ansprüche; Figuren 3,4,7 * | 1 |
| | <u>US - A - 3 283 231</u> (J.H. ASKEW) <br> * Spalte 2, Zeilen 33-65 * | 2 |
| | <u>FR - A - 2 344 859</u> (J. SCHNEIDER) <br> * Patentansprüche; Figuren 1,4 * | 2 |
| | <u>DE - A - 2 514 230</u> (CANON) <br> * Patentanspruch 1; Figuren 1,4 * | 3,6 |
| | <u>DE - A - 2 653 929</u> (FUJI PHOTO) <br> * Patentanspruch 1 * | 1 |
| P | <u>DE - A - 2 832 963</u> (AGFA) <br> * Seiten 6,7; Figur * | 1 |

**KLASSIFIKATION DER ANMELDUNG (Int. Cl.³)**

G 02 B 7/11
15/14
G 03 B 3/10

**RECHERCHIERTE SACHGEBIETE (Int. Cl.³)**

G 02 B 7/11
15/14
G 03 B 3/10

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-09-1980 | PFAHLER |

EPA form 1503.1 06.78